# EUROPÄISCHE PATENTANMELDUNG

(11) **EP 4 600 039 A1**
(43) Veröffentlichungstag der Anmeldung: **13.08.2025**
(21) Anmeldenummer: 24218948.8
(22) Anmeldetag: 11.12.2024
(51) Int. Cl.: B33Y 10/00, G01C 19/5783, G01C 21/16, G01P 1/02

(54) **VERFAHREN ZUR HERSTELLUNG EINES INERTIALEN SENSORSYSTEMS UND EIN MIT DEM VERFAHREN HERGESTELLTES INERTIALES SENSORSYSTEM**

(30) Priorität: 14.12.2023 DE 102023212700
(71) Anmelder: Fraunhofer-Gesellschaft zur Förderung der angewandten Forschung e.V., 80686 München (DE)
(72) Erfinder: Scheithauer, Uwe, 01277 Dresden (DE); Bülz, Daniel, 09126 Chemnitz (DE); Forke, Roman, 09126 Chemnitz (DE); Rebenklau, Lars, 01277 Dresden (DE)
(74) Vertreter: Pfenning, Meinig & Partner mbB

(57) **Zusammenfassung**

Das Sensorsystem ist aus einem hermetisch geschlossenen Gehäuse, das mit einer Grundplatte (1), einer im Inneren des Gehäuses angeordneten Trägerstruktur (2) und einem Deckelelement (3), die aus dem gleichen keramischen Werkstoff bestehen, gebildet. An mehreren Wänden der Trägerstruktur (2), der Grundplatte (1) und/oder dem Deckelelement (3) ist/sind jeweils eine oder mehrere Sensoreinheit(en) angeordnet. Das Deckelelement (3) ist mit einer stoffschlüssigen Verbindung hermetisch stoffschlüssig mit Grundplatte (1) und/oder Trägerstruktur (2) verbunden. Wände der Trägerstruktur (2) sind im Inneren des Gehäuses, an denen mindestens eine Sensoreinheit angeordnet ist und (die jeweils in vorgegebenen Winkeln zueinander mit einer maximalen Winkelabweichung von 2°, bevorzugt maximal 1° zueinander ausgerichtet. Sie weisen eine ebene plane Oberfläche auf. Dabei sind die Sensoreinheiten mittels elektrischer Leiterbahnen elektrisch leitend miteinander und nach außen verbunden.

## Beschreibung

Die Erfindung betrifft ein Verfahren zur Herstellung eines mehrdimensionalen inertialen Sensorsystems und ein mit dem Verfahren hergestelltes inertiales Sensorsystem.

Die so hergestellten Systeme können im Anwendungsbereich der dreidimensionalen Lage- und Positionsbestimmung unter verschiedensten Umgebungsbedingungen eingesetzt werden. Sie können als alternatives/redundantes System (z.B. bei Satelliten), wenn kein GPS-Signal verfügbar ist bzw. die Umgebungsbedingungen die Signalübertragung verhindern (tief im Berg, unter Wasser, in engen Häuserschluchten in urbaner Umgebung, ...), zur Überbrückung eines kurzzeitigen Ausfalls der "Standard-Positionsdatenbestimmung" mittels GPS oder Sternenkarten eingesetzt werden, wenn eine exakte Positions- und Lagebestimmung aus ökonomischen oder juristischen Gründen erforderlich ist (z.B. Satelliten, autonomes Fahren, Untertagefahrzeugen, ...), als leichtes/kleines System, das die IST-Position an einem Roboterkopf/Werkzeug bestimmt, als System, das die relevanten Daten in einer ausreichend hohen Frequenz in der erforderlichen Genauigkeit, Format und Qualität erzeugt und übermittelt eingesetzt werden.

Bekannte auf diesem Gebiet einsetzbare Sensoreinheiten werden üblicherweise so hergestellt, dass die Sensoren auf Leiterplatten fixiert und mit auf den Leiterplatten ausgebildeten elektrischen Leiterbahnen kontaktiert werden. Die Leiterplatten werden dann in geeigneter Form innerhalb eines Gehäuses angeordnet und montiert. Dabei werden die verschiedensten Materialien bzw. Werkstoffe in Kombination für die Leiterplatten und das Gehäuse eingesetzt. Dabei ist es nachteilig, dass bei der Montage eine sehr genaue Ausrichtung der Sensoren erforderlich ist, die auch dauerhaft während des Betriebes beibehalten werden muss, um Messfehler zu vermeiden.

Dies bereitet aber Schwierigkeiten u.a. wegen der unterschiedlichen thermischen Ausdehnungskoeffizienten der verschiedenen Materialien und Werkstoffe. Diese führen zu mechanischen Spannungen bei Temperaturwechseln, die wiederum Verformungen und mechanische Beschädigungen hervorrufen können, was dann zu Messfehlern und auch Undichtheiten mit der Umgebung zur Folge haben kann. In deren Folge kann es zur Kondensation im Inneren kommen, die weitere Nachteile hervorrufen können.

Wegen der geforderten hohen Positions- und Ausrichtungsgenauigkeit der Inertialsensoren ist ein sehr hoher Aufwand bei der Montage zu betreiben. Wie bereits angesprochen, kann die erforderliche Positions- und Ausrichtungsgenauigkeit auch durch die auftretenden mechanischen Spannungen während des Einsatzes nachteilig beeinflusst werden.

Ausgehend hiervon ist es Aufgabe der Erfindung, Möglichkeiten anzugeben, mit denen eine hohe Positions- und Ausrichtungsgenauigkeit der eingesetzten Sensoren dauerhaft und unter verschiedensten Einsatzbedingungen eingehalten und das Eindringen von Fluiden aus der Umgebung ebenfalls dauerhaft vermieden werden können.

Erfindungsgemäß wird diese Aufgabe mit einem Verfahren nach Anspruch 1 gelöst. Anspruch 9 betrifft ein mit dem Verfahren hergestelltes Sensorsystem. Vorteilhafte Ausgestaltungen und Weiterbildungen der Erfindung können mit in abhängigen Ansprüchen bezeichneten Merkmalen realisiert werden.

Bei dem erfindungsgemäßen Verfahren zur Herstellung eines mehrdimensionalen inertialen Sensorsystems mit einem geschlossenen Gehäuse, in dem mehrere Sensoreinheiten angeordnet sind, wird zuerst eine Suspension mit mindestens 40 Masse-% eines sinterbaren keramischen Pulvers und einem unter dem Einfluss elektromagnetischer Strahlung, Wärme oder einer Abkühlung aushärtbaren Polymer mit mindestens 30 Masse-%, in der die Partikel des keramischen Pulvers homogen verteilt sind, hergestellt.

Mit einem additiven Fertigungsverfahren werden schichtweise mit der Suspension zuerst eine Grundplatte und auf der Grundplatte eine Trägerstruktur mit mindestens zwei jeweils mit vorgegebenen Winkeln, bevorzugt senkrecht zueinander ausgerichteten Wänden sowie parallel dazu in einer anderen Vorrichtung oder einem nachfolgend durchgeführten Fertigungsschritt ein Deckelelement für einen hermetischen Verschluss von/der Sensoreinheiten hergestellt. Bei der additiven Fertigung kann auf an sich bekannte Vorgehensweisen und Steuerungsprogramme zurückgegriffen werden.

Dabei sollte unter hermetisch eine fluiddichte Verbindung verstanden werden, die insbesondere das Eindringen von Feuchtigkeit oder anderen aggressiven Fluiden in das Gehäuse verhindern kann, so dass Kondensation, Korrosion und andere schädliche Einflüsse aus der Umgebung vermeiden werden können.

Anschließend werden der mit der Grundplatte und mit der Trägerstruktur gebildete Grünkörper sowie das Deckelelement einer thermischen Behandlung unterzogen, bei der eine Trocknung, die thermische Zersetzung zumindest nahezu aller enthaltenen organischen Komponenten und anschließend eine Sinterung des keramischen pulverförmigen Werkstoffs erreicht werden. Der organische Restanteil soll kleiner als 3 Masse-% sein und bevorzugt sollen organische Komponenten vollständig entfernt worden sein.

Während der Durchführung des additiven Fertigungsverfahrens oder im Anschluss an die Sinterung werden zumindest an und/oder in Wänden der Trägerstruktur elektrische Leiterbahnen mit einer Suspension, die elektrisch leitende Partikel und einen organischen Binder enthält, für den Anschluss und die elektrisch leitende Verbindung zu Sensoreinheiten ausgebildet werden.

Mit einer weiteren thermischen Behandlung werden eine Trocknung, die thermische Zersetzung zumindest nahezu aller enthaltenen organischen Komponenten und anschließend eine Sinterung der elektrisch leitenden Partikel zur Ausbildung elektrischer Leiterbahnen für eine elektrische Kontaktierung der Sensoreinheiten durchgeführt. Die organischen Komponenten können dabei bei Temperaturen bis zu 600 °C sicher thermisch zersetzt werden. Die Sinterung kann für den jeweiligen keramischen Werkstoff unter Berücksichtigung der gewählten Partikelgröße des eingesetzten Pulvers anhand von vorhandenen Erfahrungswerten unter Einhaltung bekannter Parameter erreicht werden.
Danach werden die Sensoreinheiten an jeweils einer der in vorgebbaren Winkeln, bevorzugt senkrecht zueinander ausgerichtet ausgebildeten Wänden der Grundplatte, der Trägerstruktur und/oder dem Deckelement befestigt und mit den elektrischen Leiterbahnen elektrisch leitend verbunden, bevor mit dem gesinterten Deckelelement und der Grundplatte und/oder Wänden der Trägerstruktur ein hermetisch abgeschlossenes Gehäuse durch Aufsetzen des Deckelelements auf die Grundplatte oder Oberflächen von Wänden der Trägerstruktur und anschließender Ausbildung einer stoffschlüssigen Verbindung, bevorzugt mittels Löten, Sintern oder Kleben gebildet wird. Dafür kann ein "Weichlot" genutzt werden (Liquidus-Temperaturen um die 180...300 °C (Standard 220...250 °C)) oder eine Sinterverbindung mit einem Werkstoff, der bei relativ niedrigen Temperaturen (um 300 °C) versintert.

Besonders bevorzugt wird eine hochtemperaturstabile Fügung vorgenommen. Dies kann durch einen Lötprozess mit einem hochschmelzenden Metall, mit einer Schmelztemperatur von mindestens 600 °C oder ein geeigneter Haftvermittler eingesetzt werden. Das Löten sollte mit einem lokal definierten Energieeintrag, beispielsweise durch Bestrahlung mit einem Energiestrahl, bevorzugt einem Laserstrahl erfolgen, um Schädigungen an den Sensoreinheiten und den elektrischen Leiterbahnen zu vermeiden.

Dabei sollten zumindest die Wände der Trägerstruktur, an denen Sensoreinheiten befestigt werden, mit einer um maximal 2°, bevorzugt maximal 1° von der vorgegebenen Ausrichtung abweichenden Orientierung und mit einer planen ebenen Oberfläche ausgebildet werden, die bevorzugt frei von Erhebungen und Vertiefungen ist.

Bei der schichtweisen additiven Fertigung kann herkömmliche Software zum Einsatz kommen, die die jeweiligen Konstruktionsdaten für Grundplatte, Trägerstruktur und Deckelelement sowie die jeweilige Vorrichtung zum additiven Fertigen berücksichtigt.

Vorteilhaft sollten die Grünkörper der Grundplatte und Trägerstruktur mittels Wannen-Photopolymerisation stereolithografisch hergestellt werden, wodurch eine sehr große Fertigungsgenauigkeit, insbesondere bei der Ausrichtung und Oberflächengestaltung von Wänden der Trägerstruktur an denen Sensoreinheiten installiert werden, erreicht werden kann, ohne dass eine Nachbearbeitung in irgendeiner Form erforderlich ist, um die gewünschte Positions- und Ausrichtungsgenauigkeit zu erreichen.

Die Herstellung der Grünkörper mit Grundkörper und Trägerstruktur kann aber auch mit anderen additiven Fertigungsverfahren erfolgen, von denen nachfolgend Beispiele genannt werden. Siebdrucken, Jet-Drucken, Tampondrucken oder Schablonendrucken.

So kann man ebenfalls vorteilhaft eine Suspension mit den jeweiligen Feststoffpartikeln und den organischen Bestandteilen definiert Drucken um die Grundplatte, die Trägerstruktur und das Deckelelement auszubilden. Im Anschluss daran kann eine Aushärtung durch Bestrahlung, Erwärmung oder eine Abkühlung in Abhängigkeit des organischen Bestandteils der Suspension durchgeführt werden. Beim Drucken thermoplastischer polymerer Bestandteile erfolgt dies üblicherweise bei erhöhten Temperaturen, um eine geeignete Viskosität einzustellen. Nach erfolgtem Druck wird dann abgekühlt und die jeweilige(n) Schicht(en) härtet/härten dadurch aus.

Alle keramischen Einzelteile also Grundplatte, Trägerstruktur und Deckelelement sollten mit dem gleichen keramischen Werkstoff hergestellt werden.

Nach der Herstellung des keramischen Körpers inkl. dessen Sinterung erfolgt in einem zweiten technologischen Schritt die Funktionalisierung mittels Dickschichttechnik. In dieser Technik werden pastöse Werkstoffe auf die Oberfläche keramischer Substrate gedruckt und in einem Folgeschritt einer thermischen Prozessierung unterzogen. Hierbei werden die Paste umgesetzt und hierdurch auf der Oberfläche der Substrate strukturaufgelöste funktionale Schichten erzeugt.

Arten zur Verfügung stehender Dickschichtpasten sind Isolationspasten, dielektrische Pasten, Leitpasten und Pasten zur Erzeugung elektrischer Widerstände.

Elektrische Leiterbahnen und/oder elektrische Durchkontaktierungen können sie in einer bevorzugten Alternative auf oder durch Wände der Grundplatte und/oder Trägerstruktur in Dickschichttechnik vor dem hermetischen Verschluss des Gehäuses mit dem Deckelelement ausgebildet werden. Sie können aber auch gleichzeitig bei der additiven Fertigung in Wänden der Trägerstruktur und/oder der Grundplatte hergestellt werden. Sie können bei einem Druckverfahren der additiven Fertigung der Grünkörper, aber auch erst im Anschluss an die Sinterung auf Oberflächen der Trägerstruktur oder Grundplatte aufgebracht werden. Dabei können bekannte Vorgehensweisen der so genannten Dickschichttechnik eingesetzt werden. Auch elektrische Durchkontaktierungen (Vias) können mit elektrisch leitender Paste gefüllt und so elektrische leitende Verbindungen durch Wände hergestellt werden.

Auf elektrische Leiterbahnen können elektrische Isolationsschichten aufgebracht werden, um elektrische Kurzschlüsse zu vermeiden. Auf diese Isolationsschichten könnten dann weitere Leiterbahnen oder auch Dickschichtwiderstandspasten prozessiert werden. Auf diese Weise können mehrlagige Strukturen aufgebaut werden. So können beispielsweise schichtintegrierte Dickschichtwiderstände, insbesondere mit Rutheniumoxid ausgebildet werden. In Dickschichttechnologie können auch geeignete Gläser als Haftvermittler eingesetzt werden.

Als keramischer Werkstoff kann Aluminiumoxid, Siliciumnitrid, Aluminiumnitrid, Siliciumcarbid, Porzellan, Zirkonoxid, Mischungen aus Al₂O₃ und ZrO₂ und als Werkstoff für elektrische Leiterbahnen kann Cu, Al, Ag, Au, Pt, Pd oder eine Legierung dieser chemischen Elemente eingesetzt werden.

Geeignete organische Polymere, die für die Herstellung der Suspension, mit der Grundplatte, Trägerstruktur und Deckelelement erstellt werden, sind, beispielsweise (Ethyl)Cellulosen / Polyacrylate / Acrylharze / Polycarbonate / Polyvinylacetale, die in hochsiedenden Lösemitteln/Alkoholen bzw. teilweise auch in Wasser gelöst eingesetzt werden können.

Die Sensoreinheiten können mittels Kleben, Löten, Sintern, Schweißen, Drahtbonden oder in Flip-Chip-Technik elektrisch leitend mit elektrischen Leiterbahnen verbunden und befestigt werden.

Das inertiale Sensorsystem besteht aus einem hermetisch geschlossenen Gehäuse, das mit einer Grundplatte, einer im Inneren des Gehäuses angeordneten Trägerstruktur und einem Deckelelement, die aus dem gleichen keramischen Werkstoff gebildet ist. Dabei ist das Deckelelement mit einer stoffschlüssigen Verbindung, bevorzugt einer Lötverbindung (Weichlot, Reaktionslot, Sinterverbindung) oder Kleben hermetisch mit Grundplatte und/oder Trägerstruktur verbunden. An mehreren Wänden sind Sensoreinheiten angeordnet, wobei die planaren ebenen Oberflächen der Trägerstruktur im Inneren des Gehäuses, an denen jeweils eine Sensoreinheit angeordnet ist, jeweils definiert mit vorgebbaren Winkeln, bevorzugt senkrecht zueinander, mit einer maximalen Winkelabweichung von 2°, bevorzugt maximal 1° ausgerichtet sind. Außerdem sind die Sensoreinheiten mittels elektrischer Leiterbahnen elektrisch leitend miteinander und nach außen verbunden.

Insbesondere bei Abweichungen vom jeweiligen vorgegebenen Winkel bzw. der Orthogonalität aber auch generell kann eine Kompensation bzw. Kalibrierung der Sensoreinheiten durchgeführt werden, um eine exaktere Positionsbestimmungsgenauigkeit zu ermöglichen.

Sensoreinheiten können jeweils als ein mikromechanisches Sensorelement, bevorzugt als Si-MEMS-Sensoreinheit zur Messung der Beschleunigung (Accelerometer) bzw. Gravitation und Drehrate (Gyroskop) und gegebenenfalls zur Erfassung des Magnetfelds und deren Signalwandlung mittels ASIC (anwendungsspezifische integrierte Schaltung) oder diskret aufgebauter Schaltung aufweisen.

An einem erfindungsgemäßen Sensorsystem sollte mindestens eine Sensoreinheit an jeder der drei mit definierten Winkeln/ senkrecht zueinander ausgerichteten Wände der Trägerstruktur, des Deckelelements und/oder der Grundplatte angeordnet sein. Ist eine Sensoreinheit an einer Grundplatte oder am Deckelelement angeordnet, sollten mindestens zwei Sensoreinheiten bevorzugt an senkrecht dazu und jeweils ebenfalls senkrecht zueinander ausgerichteten Wänden installiert sein.

An und/oder in Wänden der Trägerstruktur können auch Temperierkanäle ausgebildet und/oder Temperierelemente angeordnet sein. Durch solche Kanäle kann ein entsprechend temperiertes Fluid je nach Bedarf zur Kühlung oder Erwärmung hindurchströmen. So kann an Sensoreinheiten ein Heizelement angeordnet sein.

Allein oder zusätzlich dazu kann auch mindestens ein Temperatursensor bevorzugt innerhalb des Gehäuses angeordnet sein, der auch zur Regelung bei der Temperierung und/oder zur Berücksichtigung des Temperatureinflusses auf die Bestimmungsergebnisse genutzt werden kann.

Als Temperierelemente können an sich bekannte elektrische Widerstandsheizelemente, die ggf. auch in Dickschichttechnik an Oberflächen der Trägerstruktur ausgebildet werden können, genutzt werden. Es können aber auch Peltierelemente als Beispiel für thermoelektrische Elemente zur Kühlung oder Erwärmung dafür eingesetzt werden.

Solche Kanäle oder Temperierelemente sollten bevorzugt an Wänden der Trägerstruktur, die Wänden an denen Sensoreinheiten angeordnet sind, abgewandt sind, oder in weit von Sensoreinheiten entfernten Wandbereichen angeordnet sein.

Mit den Temperierkanälen oder zusätzlich dazu können Verstärkungselemente an Wänden der Trägerstruktur ausgebildet werden, mit denen die Stabilität erhöht und die Ausrichtungsgenauigkeit der Wände mit den Sensoreinheiten weiter verbessert werden können. Verstärkungselemente können stegförmig über einen großen Teil der Länge von Wänden ausgebildet sein.

Wände der Trägerstruktur können mehreckig zueinander angeordnet sein und dabei bevorzugt einen inneren Hohlraum umschließen. Wände können dabei eine dreieckige, viereckige oder mehreckige Anordnung bilden. Der innere freie Hohlraum kann vorteilhaft zum Halten der Trägerstruktur während der Ausbildung elektrischer Leiterbahnen und ggf. auch zum Anbringen der Sensoreinheiten an den Wänden genutzt werden. Das Halten kann dann mit einem geeignet konturierten und dimensionierten Dorn realisiert werden, der in den Hohlraum eingeführt werden kann.

Auf einer ebenen planaren Oberfläche der Grundplatte und/oder des Deckelelements kann eine Sensoreinheit angeordnet sein. In diesem Fall sollten mindestens zwei weitere Sensoreinheiten an jeweils einer im vorgegebenen Winkel dazu ausgerichteten Wand der Trägerstruktur angeordnet sein.

Ein Deckelelement kann in einer einfachen Ausführung ebenfalls eine Platte sein, die auf nach außen weisenden Oberflächen von Wänden der Trägerstruktur aufgesetzt und dort stoffschlüssig mit der Trägerstruktur verbunden wird. Das Gehäuse ist dann mit der Grundplatte, Wänden der Trägerstruktur und dem Deckelelement gebildet.

Es besteht aber auch die Möglichkeit, ein Deckelelement einzusetzen, das einteilig in Form einer Haube ausgebildet ist, die man über eine Trägerstruktur stülpen und dabei mit Stirnflächen auf eine Oberfläche der Grundplatte aufsetzen kann, an der die stoffschlüssige Verbindung ausgebildet wird. Das Gehäuse ist dann mit Grundplatte und Deckelelement gebildet. Die Trägerstruktur ist dann im Gehäuse eingehaust. Bei entsprechender Dimensionierung steht die Trägerstruktur dann frei im Gehäuse. So können Sensoreinheiten auch an nach außen weisenden Oberflächen von Wänden der Trägerstruktur angeordnet werden, was für die Montage der Sensoreinheiten und die Ausbildung der elektrischen Leiterbahnen dort erleichternd wirkend ausgenutzt werden kann.

Die elektrischen Leiterbahnen oder eine Befestigung und ein Verschluss des Deckelelements mittels einer Lötverbindung sichern permanent die Ausrichtung der elektrischen/elektronischen Komponenten sowie deren Schutz vor den Umweltbedingungen. Durch die direkte Aufbringung bzw. Ausbildung von elektrischen Leiterbahnen auf keramische Substrate, die einen ähnlichen thermischen Ausdehnungskoeffizienten aufweisen, wie Si-basierte Komponenten, können die Anzahl der verwendeten Werkstoffe und demzufolge die thermisch induzierten mechanischen Spannungen reduziert werden. Durch die Integration und Kopplung aller inertialen Sensoreinheiten in einem System kann Masse und Platz für die einzelnen Gehäuse eingespart werden, wodurch eine Miniaturisierung des Gesamtsystems erfolgen kann. Zudem werden die Anzahl an Werkstoffen und der Einfluss der Temperatur reduziert. Die Kombination flexibler Fertigungstechnologien (AM und Dickschichttechnologie) führt dazu, dass anwendungsspezifische Geometrien realisiert werden können.

Mittels der genutzten Fertigungsverfahrenskette können sowohl die Realisierung von Kühlkanälen oder gezielte Verbesserung oder Verschlechterung der Wärmeübertragung in die einzelnen Richtungen durch die additive Fertigung der keramischen Strukturen, als auch die Realisierung von Temperatursensoren, Heizern, Peltierelementen (zum Heizen oder Kühlen) o.ä. zur aktiven Temperierung des Sensorsystems erreicht werden.

Zudem ermöglicht die additive Herstellung die Realisierung von Freiformgeometrien, die es erlauben, dass die Geometrie des Sensorsystems optimal an den zur Verfügung stehenden Bauraum angepasst werden kann, wobei die Funktionalisierung mit den elektrischen und elektronischen Komponenten dann eventuell mit alternativen Dickschichttechnologien erfolgen kann (z.B. Aerosoldruck statt Siebdruck, auch Tampondruck oder Inkjetdruck sind denkbar)

Die erfindungsgemäß nutzbaren keramischen Strukturen bieten in Kombination mit den direkt aufgebrachten elektrischen Leiterbahnen nicht nur die Funktionalität einer Leiterplatte und eines robusten keramischen Housings, sondern sichern über die 3D-Strukturen auch dauerhaft die definierte Ausrichtung der Sensorelemente. Dabei lassen sich durch die Verwendung flexibler Fertigungstechnologien die äußere und innere Geometrie und Dimensionierung flexibel auf die Geometrie der umgebenden Elemente/Strukturen anpassen sowie geometrische Strukturen und zusätzliche Werkstoffe zur aktiven Temperierung des Sensorsystems integrieren.

Nachfolgend soll die Erfindung beispielhaft näher erläutert werden.

Dabei zeigen:
Figur 1 in perspektivischer Form ein Beispiel für eine Grundplatte;
Figur 2 in perspektivischer Darstellung ein Beispiel für bei der Erfindung einsetzbare Trägerstrukturen und
Figur 3 in perspektivischer Darstellung ein Beispiel für ein Deckelelement.

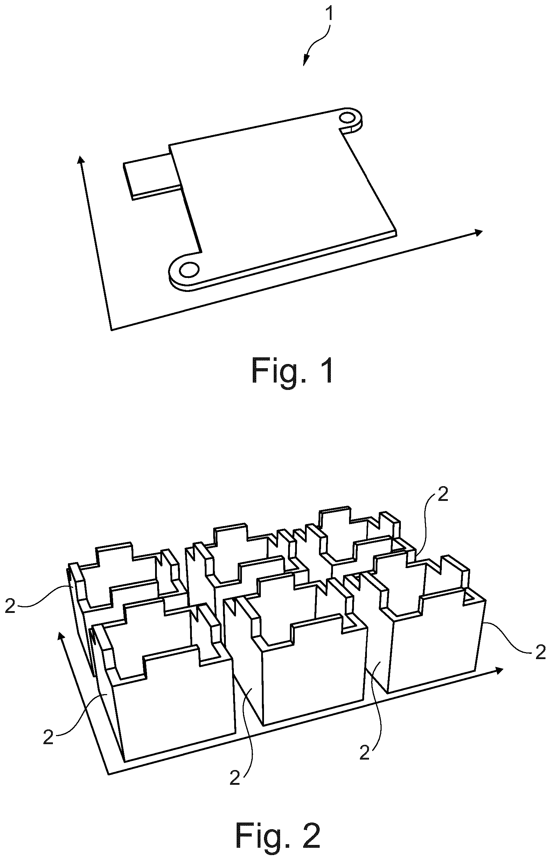

Das in Figur 1 gezeigte Beispiel zeigt eine Grundplatte 1 mit ebener planarer Oberfläche, die additiv schichtweise mit einem keramischen Werkstoff hergestellt werden kann, wie das bereits angesprochen worden ist und nachfolgend weitere Beispiele für die Fertigung noch detaillierter beschrieben werden. Auf die hier nach oben weisende Oberfläche der Grundplatte 1 können in nichtdargestellter Form elektrische Leiterbahnen ausgebildet werden mit denen dann auch mindestens eine Sensoreinheit elektrisch leitend verbunden und auf der Grundplatte angeordnet werden kann, bevorzugt bevor das Gehäuse mit dem Deckelelement 3 verschlossen wird.

In Figur 2 sind mehrere Trägerstrukturen 2 gezeigt, deren senkrecht ausgerichteten Wände als Träger für elektrische Leiterbahnen und Sensoreinheiten ausgenutzt werden können. Die Trägerstrukturen 2 sind auf der Grundplatte 1 aufgebaut worden und bilden ein einziges Teil. Sie werden im selben Verfahren, wie die Grundplatte 1 direkt an ihr aufgebaut. An bzw. in den Wänden können hier nicht erkennbare elektrische Leiterbahnen ausgebildet sein, die mit Sensoreinheiten verbunden werden können.

Dabei besteht auch die Möglichkeit, auf einer Grundplatte 1 mehrere Trägerstrukturen 2 herzustellen und anschließend durch ein Trennverfahren, die Ausgangsgrundplatte in mehrere Einzelteile zu trennen, die dann einzeln zur Herstellung von mehreren Sensorsystemen genutzt werden können.

Es besteht aber auch die Möglichkeit, Grundplatten 1 und Trägerstrukturen 2 gesondert zu fertigen. Dies sollte aber jeweils mit dem gleichen keramischen Werkstoff und bevorzugt auch mit dem gleichen Fertigungsverfahren erfolgen. Nach der gesonderten Fertigung kann eine Funktionalisierung und Bestückung durchgeführt werden. Bei diesem Vorgehen werden diese Tätigkeiten vereinfacht, da die Zugänglichkeit verbessert ist. Es können auch einfachere Geometrien für die einzelnen Elemente die ein System bilden gewählt werden. Grundplatten 1 und Trägerstrukturen 2 können nach ihrer Fertigung verbunden werden. Dazu können Aufnahmen für eine Trägerstruktur 2 in die Grundplatten 1 bei deren Fertigung ausgebildet werden, mit denen eine genaue Positionierung zueinander unterstützt werden kann. Dieses Vorgehen erleichtert die Funktionalisierung und Bestückung mit den Sensoreinheiten wegen der begrenzt zur Verfügung stehenden Materialkombinationen.

Generell können auch mehrere Trägerstrukturen 2 auf einer Grundplatte 1 vorgesehen werden, wodurch ausreichend großer Bauraum für die Bestückung mit Sensoreinheiten und die Ausbildung elektrischer Leiterbahnen geschaffen werden kann.

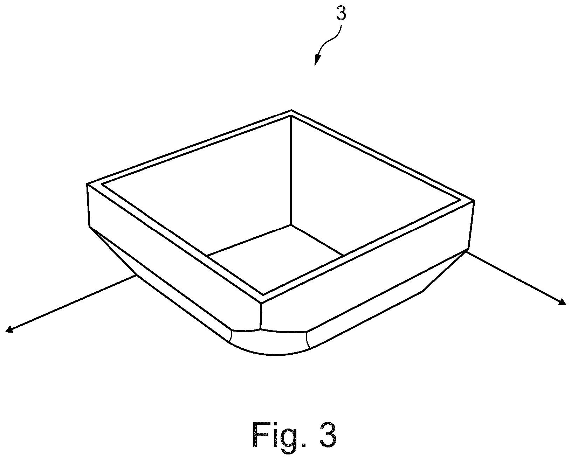

Figur 3 zeigt ein Beispiel eines hier haubenförmigen Deckelelements 3. Dieses Deckelelement 3 kann auf ein fertig hergestelltes Halbzeug, das mit Grundplatte 1 und Trägerstruktur 2 aus keramischem gesintertem Werkstoff gebildet und mit mindestens einer bevorzugt mindestens drei Sensoreinheiten bestückt ist, aufgesetzt werden, wobei die Öffnung des haubenförmigen Deckelelements 3 in Richtung Grundplatte 1 weist. Die sich berührenden Oberflächen der Grundplatte 1 und der Stirnwand des Deckelelements 3 können dann stoffschlüssig, bevorzugt durch Löten hermetisch dicht miteinander verbunden werden. Das Deckelement 3 sollte aus dem gleichen keramischen gesinterten Werkstoff bestehen, wie Grundplatte 1 und Trägerstruktur 2.

So kann man beispielsweise wie folgt vorgehen.

Vor der eigentlichen Herstellung müssen die Komponenten ausgelegt und mittels Konstruktions-Software (z.B. Solid Works, FreeCad, AutoCAD, Rhino usw.) im virtuellen Raum erzeugt werden.

Nach der Erzeugung der Steuerungsdaten für die additive Fertigung (CAD) erfolgt die Planung der Herstellung mittels additiver Fertigung, hier bevorzugt unter Verwendung der CerAM VPP- (Wannen-Photopolymerisation) Technologie. Die der Konstruktion entsprechende Anlagen-Software wird in die Fertigungsanlage geladen und die Fertigung kann dann gestartet werden, um Grünkörper der drei Komponenten Grundplatte, Trägerstruktur und Deckelelement herzustellen. Zur Herstellung kann eine CeraFab8500 Anlage, die von der Fa. Lithoz gewerblich vertrieben wird, eingesetzt werden.

Um eine optimale Fertigung und Ausnutzung der Fertigungsanlage zu erreichen sollte die Ausrichtung der herzustellenden Grünkörper für die Komponenten im Bauraum geplant werden. Mittels der Steuerung können die Herstellungs-/Druckparameter (z.B. Wannenrotation, Abkippen, Aufkippen, Bauschichtdicke, Belichtungsenergie, Materialauftrag usw.) für das jeweils verwendete Material eingestellt werden. In Abhängigkeit der Bauschichtdicke erfolgt das Zerlegen der einzelnen Komponenten in Schichten (Slicen) in einer entsprechenden Schichtanzahl, für die additive Fertigung der Grünkörper.

Vor dem eigentlichen Beginn der additiven Fertigung soll die jeweilige Suspension, beispielsweise eine photoreaktive Aluminiumoxidsuspension zur Verfügung gestellt werden, in der eine homogene Verteilung der einzelnen Komponenten erreicht worden ist. Als organische Bestandteile können Photoreaktive Resin-Harze (Monomere und Oligomere), wie z.B. Acrylate, Methacrylate, Epoxyacrylate u.ä. in einer definierten Menge in ein für den Aufbereitungsprozess geeignetes Gefäß vorgelagert werden. Die Zugabe weiterer Additive, wie z.B. reaktive Verdünner, Rheologieadditive, plastifizierende Fluide, Initiatoren (abgestimmt auf die Wellenlänge der verwendeten AM-Anlage) und oberflächenmodifizierende Stoffe wie Dispergatoren (Verflüssiger für das Al₂O₃-PuI-ver) ist möglich.

Zur Homogenisierung erfolgt ein sorgfältiges Mischen der Komponenten (z.B. Dispermat, Planetenkugelmischer, Hochgeschwindigkeitsmischer usw.). Aluminiumoxidpulver wird in entsprechender Menge, insbesondere im Bereich 50 Masse-% - 85 Masse-% bzw. 35 Vol-% - 65 Vol.-% den organischen viskosen Komponenten zugegeben. Das Dispergieren und Homogenisieren des Aluminiumoxidpulvers in der Polymerformulierung kann mittels Aufbereitungsaggregat (z.B. Dispermat, Planetenkugelmischer, Hochgeschwindigkeitsmischer usw.) erreicht werden, um die homogene und vollständige Deagglomeration der Pulverpartikel/-granulate für eine enge Verteilung zu erreichen.

Die Aufbereitung kann in mehreren Etappen (definierte Dauer bis zu 2 h) je nach Aggregat mit Zwischenkühlung erfolgen. Nach der Aufbereitung können notwendige Aufbereitungshilfsmittel (evtl. Verwendete Mahlkugeln) abgetrennt und enthaltene Luft durch evakuieren entfernt werden. Außerdem kann eine Charakterisierung der rheologischen und photoreaktiven Eigenschaften zur Qualitätskontrolle durchgeführt werden.

Die Formgebung kann via CerAM VPP (Vat Photo-Polimerisation) wie folgt erfolgen:
Vorbereitungsschritte bei der additiven Fertigung sind: Bauplattform einlegen, Wanne vorbereiten, Rakel initialisieren, Einladen der Steuerungssoftware für die herzustellenden Grünkörper in die Fertigungsanlage, Einfüllen der zuvor hergestellten Suspension bzw. Einlegen einer Suspension enthaltenden Materialkartusche für eine automatisierte Materialzufuhr, Einstellung und Optimierung der Rakelparameter für optimalen Suspensionsauftrag zur Erzeugung homogener Schichten.

Der Start des Bauvorgangs kann dann erfolgen. Bei einem Abdrucktest fährt die Bauplattform dazu auf die Wanne hinunter und dringt in Suspension ein, dabei wird die Ausrichtung (Parallelität) geprüft. Die Bauplattform wird dann in z-Richtung nach oben bewegt, so dass neue Suspension homogen aufgetragen wird. Im Anschluss daran fährt die Bauplattform wieder in die Wanne. Es wird dann eine initiale Schicht an der Bauplattform (rückwärtsbelichtete Schicht) als volle Fläche ausgebildet, die durch Belichtung und Polymerisation und Verfestigung des belichteten Bereiches mittels lokal definierter Bestrahlung mit zur Photopolymerisation geeigneter elektromagnetischer Strahlung dazu führt, dass eine Schicht aus dem verfestigten Material in den bestrahlten Bereichen dieser Schicht erhalten wird. Die Bauplattform wird danach in z-Richtung nach oben bewegt und neue Suspension wird mit dem Rakel homogen aufgetragen, woraufhin die Bauplattform zurück in die Wanne um die Dicke der jeweiligen Bauschichtdicke nach oben versetzt, bewegt wird. Die Erzeugung der ersten Bauschicht erfolgt ebenfalls durch Bestrahlung der entsprechenden Bereiche im Baufeld mit geeigneter elektromagnetischer Strahlung, bevorzugt mit einem DLP-Modul (Digital Light Processing) von unten durch die für die elektromagnetische Strahlung transparente, beispielsweise gläserne Wanne für eine ortsaufgelöste Polymerisation des entsprechenden Photopolymers der Suspension (nur in belichteten Bereichen). Dann wird ein Abkippen der Wanne für schonende Dekontaktierung der ausgebildeten Schicht von der Wanne ausgeführt. Im Anschluss daran wird die Bauplattform nach jeder ausgebildeten Schicht eines herzustellenden Grünkörpers in z-Richtung nach oben bewegt und neue Suspension homogen aufgetragen. Es erfolgt eine sukzessive Ausbildung einer definierten Anzahl weiterer Startschichten (variabler Parameter, Standard = 5 Startschichten) nach zuvor benanntem Schema mit dafür eingestellten Parametern bis alle für die herzustellenden Grünkörper erforderlichen Schichten ausgebildet worden sind. Die einzelnen nacheinander ausgebildeten und bestrahlten Schichten bilden dann die Grundplatte und an der Grundplatte die Trägerstruktur sowie das Deckelelement in Abhängigkeit der durch die lokal definierte Bestrahlung ausgebildeten Kontur oder Flächen.

Nach Fertigung der letzten Komponentenschicht ist der Baujob abgeschlossen und es kann zur Reinigung übergegangen werden.

Verwendete Parameter für Formgebung mittels CerAM VPP auf CeraFab 8500 der Fa. Lithoz:
Rakelblattneigungswinkel zur Ausbildung von Schichten: 0 - 2°, bevorzugt 0,6°
Rakelblattneigungswinkel zum Abstreifen: 0-2°, bevorzugt 0,6° Rakelanstellwinkel: 44°-48°, bevorzugt 45,5°
Drehung der Rakel: 1mal -10 mal, bevorzugt 2 mal Drehgeschwindigkeit: 20 °/s- 360 °/s, bevorzugt 200 °/s Beruhigungszeit: 0-600 s, bevorzugt 8 s
Hochfahrgeschwindigkeit in z-Richtung: 0,1 °/s - 50°/s, bevorzugt 8 °/s Belichtungszeit: 0-15 s, bevorzugt 1,2 s
Energie der elektromagnetischen Strahlung: 5-1000 mJ/cm², bevorzugt 140 mJ/cm²
Intensität der elektromagnetischen Strahlung: 0,5-56,6 mW/cm², bevorzugt 56,6 mW/cm²
Absenkgeschwindigkeit 01,-50 °/s, bevorzugt 8 °/s.

Zur Nachbearbeitung können die gefertigten Komponenten mittels spezieller Reinigungslösung in Kombination mit Druckluft in mehreren Schritten von anhaftender Suspension befreit und bestmöglich gesäubert werden. Die Qualität des finalen Produktes hängt signifikant von der Reinigung ab. Es sollte eine hohe Sorgfalt geboten sein, um Grünkörper nicht zu schädigen. Dann kann ein vorsichtiges Entfernen der hergestellten Grünkörper von der Bauplattform, beispielsweise mittels Klinge erfolgen. Bei der Qualitätskontrolle der Grünkörper sollten die Oberflächenbeschaffenheit, die Vollständigkeit und Baufehler sowie die Maße in alle Raumrichtungen berücksichtigt werden.

Dann kann vor der Entbinderung zur Entfernung organischer Komponenten ein Pre-Konditionierungsschritt durchgeführt werden, bei dem ein Ausheizen der Grünkörper bis 120 °C für mehreren Stunden (min. 12 h bis max. 72 h) zur Nachvernetzung nicht vollständig vernetzter Bereiche und Entfernen von evtl. verwendeter leichtflüchtiger Komponenten aus den Grünkörpern sowie der verwendeten Reinigungslösung erfolgen.

Hergestellte Grünkörper-Substrate können dann entsprechend eines möglichst genau definierten Temperatur-Zeitprofils bis min. 600°C ausgeheizt werden, um so die organischen Komponenten, die für den Herstellungsprozess notwendig sind und als Bindemittel zwischen den Partikeln dienen wieder zu entfernen. Das Aufheizen kann bei Aluminiumoxid auch bis 1100 °C durchgeführt werden, um zu einer Vorfestigung zu kommen, so dass ein möglicherweise notwendiges Umsetzen in den Sinterofen für den Folgeschritt mit weniger Defektrisiko einhergeht.

Während der Entbinderung werden die organischen Bestandteile vollständig thermisch zersetzt und gasförmig abgeführt.

Bei einer Pre-Konditionierung über 72 h bei 120 °C und einer Ausgangstemperatur von 25 °C können folgende Parameter eingehalten werden:
1h 15 min mit einer Heizrate von 0,2 K/min auf eine Temperatur von 90 °C bei einer Haltezeit von 5 h
1h 40 min mit einer Heizrate von 0,2 K/min auf eine Temperatur von 110 °C bei einer Haltezeit von 5h
50 min mit einer Heizrate von 0,2 K/min auf eine Temperatur von 120 °C bei einer Haltezeit von 38 h
6 h mit einer Heizrate von 0,25 K/min auf eine Temperatur von 30 °C bei einer Haltezeit von 0

Temperaturregime für Entbinderung:
Heizzeit 3 h 10 min, Heizrate 0,5 K/min, Temperatur 120 °C, Haltezeit 1 h
Heizzeit 1 h 40 min, Heizrate 0,1 K/min, Temperatur 130 °C, Haltezeit 3 h
Heizzeit 6 h 40 min, Heizrate 0,1 K/min, Temperatur 170 °C, Haltezeit 3 h
Heizzeit 8 h 20 min, Heizrate 0,1 K/min, Temperatur 220 °C, Haltezeit 4 h
Heizzeit 2 h 30 min, Heizrate 0,2 K/min, Temperatur 250 °C, Haltezeit 5 h
Heizzeit 6 h 15 min, Heizrate 0,2 K/min, Temperatur 325 °C, Haltezeit 5 h
Heizzeit 3 h 30 min, Heizrate 0,5 K/min, Temperatur 430 °C, Haltezeit 2 h
Heizzeit 11 h 10 min, Heizrate 1 K/min, Temperatur 1100 °C, Haltezeit 1 h
Heizzeit 3 h 10 min, Heizrate 0,5 K/min, Temperatur 120 °C, Haltezeit 1 h
Heizzeit 3 h 10 min, Heizrate 0,5 K/min, Temperatur 120 °C, Haltezeit 1 h

Anschließend erfolgt die Abkühlung mit einer Kühlrate von 3 K/min

Entbinderte Substratkörper (Braunkörper) können falls notwendig in einen Sinterofen umgesetzt werden. Die Sinterung kann nach einem definierten Temperatur-Zeitprofil, beispielsweise für das Aluminiumoxid bis zu einer maximalen Sintertemperatur von 1600 °C-1700 °C durchgeführt werden. Hierbei können verschiedene Heizraten und Haltezeiten eingehalten werden, um das Aluminiumoxidmaterial optimal zu verdichten (Sinterdichte min. 98 % und höher) und ein homogenes dichtes Gefüge mit hoher Performance zu erzeugen, so dass das gesinterte Aluminiumoxid die bestmöglichen Eigenschaften bzgl. Oberfläche und Festigkeit aufweist

Temperaturregime für Sinterung:
Heizzeit 1 h, Heizrate 2,9 K/min, Temperatur 200 °C
Heizzeit 10 h, Heizrate 0,67 K/min, Temperatur 600 °C
Heizzeit 6 h, Heizrate 1,53 K/min, Temperatur 1150 °C
Heizzeit 9 h 30 min, Heizrate 0,88 K/min, Temperatur 1650 °C, Haltezeit 2 h
Heizzeit 9 h, Heizrate -0,83 K/min, Temperatur 1200 °C
Heizzeit 1 h 28 min, Heizrate -1,83 K/min, Temperatur 50 °C

Alternativ kann die Herstellung auch über die parallele Verarbeitung von mehreren Werkstoffen mittels additiver Fertigung erfolgen. Dabei können sowohl das keramische Substratmaterial als auch die elektrisch leitfähigen Materialien zum Grünkörper verarbeitet werden. Anschließend ist eine thermische Prozessierung (Entbinderung und Sinterung) durchzuführen. Bei der Auswahl an möglichen Materialkombinationen sollten die zu kombinierenden Materialien vergleichbare thermische Ausdehnungskoeffizienten sowie ein vergleichbares Schwindungsverhalten während der Sinterung sowie geeignete Viskositäten für das jeweilige Fertigungsverfahren aufweisen. Mögliche Materialkombinationen sind z.B. LTCC (glas-gebundene, niedrigsinternde Keramik) und Ag, elektrisch leitfähige und isolierende Mischungen auf Basis Si₃N₄-MoSi₂-SiC sowie Glas ohne und mit elektrisch leitfähigen Partikeln (z.B. Grafit).

Eine Verarbeitung dieser Werkstoffe kann sowohl über CerAM VPP, als auch über CerAM MMJ (Multi Material Jetting) oder CerAM FFF (Fused Filament Fabrication) erfolgen. Dazu müssen die Werkstoffe zunächst in für das jeweilige AM-Verfahren geeignete Ausgangsmaterialien (photopolymerisierbare Suspension bzw. thermoplastische Suspension bzw. thermoplastisches Filament) überführt werden. Anschließend erfolgt die Formgebung, bei der die elektrisch leitfähigen Materialien auch innerhalb des Substratmaterials "eingegraben" werden können. Bei der Co-Entbinderung können die rein thermische Entbinderung (CerAM VPP und CerAM MMJ) oder eine Kombination aus Lösungsmittelentbinderung und thermischer Entbinderung (CerAM FFF) eingesetzt werden.

Bei einer Qualitätsprüfung können eine Kontrolle der Abmaße in alle Raumrichtungen und die Qualität der Sinterstruktur, eine Kontrolle hinsichtlich Form und Oberflächengüte und ggf. eine Charakterisierung zur Qualitätsprüfung (z.B. Dichteanalyse, CT, 3D-Scan...) durchgeführt werden.

Bei einer ggf. erforderlichen Nachbearbeitung kann im Anschluss falls notwendig eine Maß- und Formkorrektur sowie eine Verbesserung des Oberflächenfinish (Schleifen und Polieren) durchgeführt werden.

Wiederum im Anschluss daran kann ggf. im Anschluss an eine weitere Reinigung die Ausbildung elektrischer Leiterbahnen erfolgen.

Dazu können elektrische Durchkontaktierungen (Vias) mit an sich bekannten Durchkontaktierungspasten, die einen erhöhten Feststoffgehalt aus typischerweise Ag, AgPt, AgPd oder Pt aufweisen durch Wände der Trägerstruktur, die Grundplatte und falls erforderlich auch durch das Deckelelement ausgebildet werden. Die Ausbildung kann mit Schablonendruck erfolgen.

Elektrische Leiterbahnen können auf der Trägerstruktur und ggf. der Grundplatte ebenfalls in Dickschichttechnologie durch Aufdrucken ausgebildet werden. Hierfür können die verschiedensten Druckverfahren, insbesondere Siebdrucken, Schablonendruck, Stempeldruck, Jettingdruck oder Aerosoldruck genutzt werden. Nach dem Drucken können die Metallpartikel enthaltenden Pasten getrocknet werden. Die Trocknung der Pasten kann bei 150 °C über eine Zeit von 15 min bis 20 min erreicht werden.

Im Anschluss an die Trocknung werden die organischen Komponenten der eingesetzten Pasten entfernt und eine Sinterung der metallischen Bestandteile erreicht. Die Temperatur kann dabei weiter erhöht werden, bis die Sintertemperatur der metallischen Feststoffe erreicht worden ist. Bei Ag oder Ag enthaltenden Pasten sollten 850 °C bis 950 °C und bei Pt-hatigen Pasten etwas höhere Temperaturen von 950 °C bis 1300 °C eingehalten werden. Die jeweilige Maximaltemperatur sollte über ca. 10 min gehalten werden.

Danach kann eine mindestens einlagige Isolationsschicht aufgebracht werden, um elektrische Kurzschlüsse zu vermeiden. Auch hierfür kann eine elektrisch isolierende Paste, bevorzugt mittels Siebdruck ein- oder mehrschichtig aufgedruckt werden. Wobei nach dem Aufbringen der einzelnen Schichten eine Trocknung bei ca. 150 °C über 15 min bis 20 min durchgeführt werden sollte. Daran kann sich das "Einbrennen" der Paste anschließen. Sollten die für elektrische Isolationsschichten eingesetzten Pasten anorganische elektrisch nicht leitende Bestandteile, wie insbesondere Keramikpartikel enthalten, kann das Einbrennen bei entsprechend hohen Temperaturen durchgeführt werden. Bei bekannten zur Isolation eingesetzten Pasten sind dies üblicherweise 500 °C bis 850 °C.

Prinzipiell gibt es auch die Möglichkeit der Schichtdickenverstärkung bei Löt-, Bond- oder stark mechanisch beanspruchten Kontaktflächen (Lötpads, Bondpads, Kontaktpads). Hierzu muss eine Abdeckung mit Brenntemperatur bei 850°C eingesetzt werden. In diesem Fall werden die entsprechenden Flächen wiederholt mit Leitpaste versehen (jeweils wieder Drucken, Trocknen, Brennen). Mit dieser Padverstärkung kann eine Erhöhung der Schichtdicke am im Padbereich erreicht werden. Dies kann notwendig sein, wenn z.B. bei einem elektrischen Leiterzug mit einer Schichtdicke von 10 µm ein Dickdraht mit Durchmesser 500 µm gebondet werden soll, da dies u.U. aufgrund der zu dünnen Schicht nicht funktioniert. Als Lösung kann die Schichtdicke eines Bondpads verstärkt (dicker gemacht) werden. Ähnlich ist es beim Löten. Elektrische Leiterzüge bestehen i.d.R. aus Silber. Das Silber kann sich aber beim Weichlöten im Lot auflösen (ablegieren). Aus diesem Grund wird diesen Pasten Pt oder Pd zugegeben, um die Anlegierfestigkeit zu erhöhen. An der Stelle kann das Pad auch hinsichtlich der Schichtdicke verstärkt werden.

Die so vorbereiteten Keramikteile können dann mit den Sensoreinheiten bestückt und dabei mit ausgebildeten elektrischen Leiterbahnen verbunden werden

Bei dem Bestücken der funktionalisierten Keramiksubstrate können Mikrocontroller, Kondensatoren, Widerständen, Spannungsreferenz, Oszillatoren, LEDs, Beschleunigungssensor-ASIC usw. z.B. mittels Reflow-Löten aufgebracht und elektrisch kontaktiert werden. Nach dem elektrischen Anschluss kann ein elektrischer und funktionaler Test der Schaltkreise ohne Sensorkomponenten durchgeführt werden. Danach können z.B. Si-MEMS-Sensorkomponenten und Drehratensensor(=Gyroskop)-ASICs aufgeklebt und der Kleber danach und ausgehärtet werden. MEMS-Sensorkomponenten und ASICs können auch mittels Bondtechnologien, wie z.B. Flipchiptechnik aufgebracht/montiert werden. Ein Auflöten, Kleben oder Sintermontage ist ebenfalls denkbar. Die elektrische Kontaktierung erfolgt in diesem Fall direkt. In herkömmlicher Art und Weise erfolgt eine elektrische Kontaktierung durch Drahtbondverfahren. Die MEMS-Komponenten und auch der ASIC können vorteilhaft zumindest teilweise einem Re-Design für die Kontakt-Anschlüsse unterzogen werden.

Nach der Ausbildung der elektrischen Leiterbahnen und der Bestückung mit den Sensoreinheiten kann der hermetische Verschluss mit dem Deckelelement mit einer stoffschlüssigen Verbindung, wie bereits erläutert, hergestellt werden.

## Patentansprüche

1. Verfahren zur Herstellung eines mehrdimensionalen inertialen Sensorsystems mit einem geschlossenen Gehäuse, in dem mehrere Sensoreinheiten angeordnet sind, bei dem
eine Suspension mit mindestens 40 Masse-% eines sinterbaren keramischen Pulvers und einem unter dem Einfluss elektromagnetischer Strahlung, Abkühlung oder Wärme aushärtbarem Polymer mit mindestens 30 Masse-%, in der die Partikel des keramischen Pulvers homogen verteilt sind, hergestellt wird, und
mit einem additiven Fertigungsverfahren schichtweise mit dieser Suspension zuerst eine Grundplatte (1) und auf der Grundplatte (1) eine Trägerstruktur (2) mit mindestens zwei jeweils in vorgebbaren Winkeln zueinander ausgerichteten Wänden sowie parallel dazu in einer anderen Vorrichtung oder einer nachfolgend durchgeführten Fertigungsschritt ein Deckelelement (3) für einen hermetischen Verschluss der Sensoreinheiten hergestellt werden und
anschließend die mit der Grundplatte (1) mit der Trägerstruktur (2) und dem Deckelelement (3) gebildeten Grünkörper einer thermischen Behandlung unterzogen werden, bei der eine Trocknung, die thermische Zersetzung nahezu aller enthaltenen organischen Komponenten und anschließend eine Sinterung des keramischen pulverförmigen Werkstoffs erreicht werden und
während der Durchführung des additiven Fertigungsverfahrens und/oder im Anschluss an die Sinterung zumindest an und/oder in Wänden der Trägerstruktur (2), der Grundplatte (1) oder dem Deckelelement (3) elektrische Leiterbahnen mit einer Suspension, die elektrisch leitende Partikel und einen organischen Binder enthält, für den Anschluss und die elektrisch leitende Verbindung zu Sensoreinheiten ausgebildet werden und mit einer weiteren thermischen Behandlung eine Trocknung, die thermische Zersetzung nahezu aller enthaltenen organischen Komponenten und anschließend eine Sinterung der elektrisch leitenden Partikel zur Ausbildung elektrischer Leiterbahnen für eine elektrische Kontaktierung der Sensoreinheiten durchgeführt wird und
danach werden die Sensoreinheiten an jeweils einer der in vorgebbaren Winkeln zueinander ausgerichtet ausgebildeten Wände der Grundplatte (1), Trägerstruktur (2) oder dem Deckelelement (3) befestigt und mit den elektrischen Leiterbahnen elektrisch leitend kontaktiert werden, bevor
mit dem gesinterten Deckelelement (3), und der Grundplatte (1) und/oder Wänden der Trägerstruktur (2) ein hermetisch abgeschlossenes Gehäuse durch Aufsetzen des Deckelelements (3) auf die Grundplatte (1) oder Oberflächen von Wänden der Trägerstruktur (2) und anschließender Ausbildung einer stoffschlüssigen Verbindung gebildet wird.

2. Verfahren nach Anspruch 1, **dadurch gekennzeichnet, dass** zumindest die ebenen planaren Oberflächen der Grundplatte (1), Deckelelement (3) und Trägerstruktur (2), an denen Sensoreinheiten befestigt werden, maximal 2°, bevorzugt maximal 1° von der vorgegebenen Ausrichtung zueinander abweichen.

3. Verfahren nach einem der vorhergehenden Ansprüche, **dadurch gekennzeichnet, dass** der Grünkörper mit Grundplatte und Trägerstruktur mittels Wannen-Photopolymerisation stereolithografisch hergestellt wird.

4. Verfahren nach einem der vorhergehenden Ansprüche, **dadurch gekennzeichnet, dass** der/die Grünkörper für die Grundplatte (1) mit Trägerstruktur (2) und/oder das Deckelelement (3) mittels Siebdrucken, Jet-Drucken, Tampondrucken oder Schablonendrucken hergestellt wird/werden.

5. Verfahren nach einem der vorhergehenden Ansprüche, **dadurch gekennzeichnet, dass** elektrische Leiterbahnen und/oder elektrische Durchkontaktierungen auf oder durch Wände der Grundplatte (1) und/oder Trägerstruktur (2) in Dickschichttechnik vor dem hermetischen Verschluss des Gehäuses mit dem Deckelelement (3) ausgebildet werden.

6. Verfahren nach einem der vorhergehenden Ansprüche, **dadurch gekennzeichnet, dass** als keramischer Werkstoff Aluminiumoxid, Siliciumnitrid, Aluminiumnitrid oder Siliciumcarbid und als Werkstoff für elektrische Leiterbahnen Ag, Au, Pt, Pd, W oder eine Legierung dieser chemischen Elemente eingesetzt wird.

7. Verfahren nach einem der vorhergehenden Ansprüche, **dadurch gekennzeichnet, dass** die Sensoreinheiten mittels Drahtbonden oder in Flip-Chip-Technik elektrisch leitend mit elektrischen Leiterbahnen verbunden und befestigt werden.

8. Verfahren nach einem der vorhergehenden Ansprüche, **dadurch gekennzeichnet, dass** die stoffschlüssige Verbindung des Deckelelements (2) mit der Grundplatte (1) oder Oberflächen von Wänden der Trägerstruktur (2) mittels Löten oder Kleben hergestellt wird.

9. Sensorsystem hergestellt mit einem Verfahren nach einem der vorhergehenden Ansprüche, **dadurch gekennzeichnet, dass** das Sensorsystem aus einem hermetisch geschlossenen Gehäuse, das mit einer Grundplatte (1), einer im Inneren des Gehäuses angeordneten Trägerstruktur (2) und einem Deckelelement (3), die aus dem gleichen keramischen Werkstoff bestehen, gebildet ist, wobei an mehreren Wänden der Trägerstruktur (2), der Grundplatte (1) und/oder dem Deckelelement (3) jeweils eine oder mehrere Sensoreinheit(en) angeordnet ist/sind, und dabei das Deckelelement (3) mit einer stoffschlüssigen Verbindung hermetisch stoffschlüssig mit Grundplatte (1) und/oder Trägerstruktur (2) verbunden ist, wobei
Wände der Trägerstruktur (2) im Inneren des Gehäuses, an denen mindestens eine Sensoreinheit angeordnet ist und (die jeweils in vorgegebenen Winkeln zueinander mit einer maximalen Winkelabweichung von 2°, bevorzugt maximal 1° zueinander ausgerichtet sind und eine ebene plane Oberfläche aufweisen und dabei
die Sensoreinheiten mittels elektrischer Leiterbahnen elektrisch leitend miteinander und nach außen verbunden sind.

10. Sensorsystem nach dem vorhergehenden Anspruch, **dadurch gekennzeichnet, dass** eine Sensoreinheit jeweils mindestens ein mikromechanisches Sensorelement zur Messung der Beschleunigung, der Drehrate oder des Magnetfelds und deren Signalwandlung mittels einer anwendungsspezifischen integrierten Schaltung oder diskret aufgebauter Schaltung aufweisen.

11. Sensorsystem nach einem der vorhergehenden Ansprüche, **dadurch gekennzeichnet, dass** mindestens eine Sensoreinheit an jeder der mit vorgebbaren definierten Winkeln zueinander ausgerichteten Wände der Trägerstruktur (2), dem Deckelelement (3) und/oder der Grundplatte (1) angeordnet sind.

12. Sensorsystem nach einem der vorhergehenden Ansprüche, **dadurch gekennzeichnet, dass** an und/oder in Wänden der Trägerstruktur (2) und/oder der Grundplatte (1) Temperierkanäle ausgebildet und/oder Temperierelemente und/oder mindestens ein Temperatursensor angeordnet sind.

13. Sensorsystem nach einem der vorhergehenden Ansprüche, **dadurch gekennzeichnet, dass** Wände der Trägerstruktur (2) mehreckig zueinander angeordnet sind und bevorzugt einen inneren Hohlraum umschließen und/oder
die Wände an denen Sensoreinheiten angeordnet sind, senkrecht zueinander und mindestens zwei Wände senkrecht zueinander und in Bezug zur Grundplatte (1) oder einer Innenwand des Deckelelements (3) ausgerichtet sind.

14. Sensorsystem nach dem vorhergehenden Anspruch, **dadurch gekennzeichnet, dass** mindestens eine der Sensoreinheiten ein zusätzliches Heizelement aufweist.

15. Sensorsystem nach einem der vorhergehenden Ansprüche, **dadurch gekennzeichnet, dass** die Sensoreinheiten als Si-MEMS-Sensoreinheiten ausgebildet sind.
